# EUROPEAN PATENT APPLICATION

(11) **EP 4 629 566 A1**
(43) Date of publication of application: **08.10.2025**
(21) Application number: 23897474.5
(22) Date of filing: 14.11.2023
(51) Int. Cl.: H04L 12/28, G06Q 50/10

(54) **NOTIFICATION SYSTEM, NOTIFICATION DEVICE, NOTIFICATION METHOD, AND PROGRAM**

(30) Priority: 30.11.2022 JP 2022192037
(71) Applicant: Panasonic Intellectual Property Management Co., Ltd., Kadoma-shi, Osaka 571-0057 (JP)
(72) Inventor: IKEUCHI, Hiromu, Kadoma-shi, Osaka 571-0057 (JP); ISHII, Masahiro, Kadoma-shi, Osaka 571-0057 (JP)
(74) Representative: Novagraaf International SA
(86) International application number: PCT/JP2023/040898
(87) International publication number: WO 2024/116823

(57) **Abstract**

A notification system (1) includes a first obtainer (11), a second obtainer (12), and a processing unit (13). The first obtainer (11) obtains event information about an event that has occurred, from an information source device (3) or an information source service (4) that is a source of information to be notified by a notification device (2). The second obtainer (12) obtains a trigger indicating that the notification device (2) has been activated. The processing unit (13) suspends output of notification information indicating content of the event from the notification device (2) until the trigger is obtained, and causes the notification device (2) to output notification information when the trigger is obtained.

## Description

### [Technical Field]

The present disclosure relates to a notification method to output notification information indicating content of an event from a notification device, when event information about the event is obtained from information source device or information source service.

### [Background Art]

For example, PTL 1 discloses a technique of providing an instruction of content and timing of speech to a household appliance having a voice input and output function to cause the household appliance to speak.

### [Citation List]

### [Patent Literature]

[PTL 1] Japanese Unexamined Patent Application Publication No. 2017-151718

### [Summary of Invention]

### [Technical Problem]

The present disclosure provides a notification system and so on that enables a user to easily notice occurrence of an event to be addressed by the user.

### [Solution to Problem]

A notification system according to one aspect of the present disclosure includes a first obtainer, a second obtainer, and a processing unit. The first obtainer obtains event information about an event that has occurred, from an information source device or an information source service that is a source of information to be notified by a notification device. The second obtainer obtains a trigger indicating that the notification device has been activated. The processing unit suspends output of notification information indicating content of the event from the notification device until the trigger is obtained, and causes the notification device to output the notification information when the trigger is obtained.

A notification device according to one aspect of the present disclosure includes: an instruction obtainer and an outputter. The instruction obtainer obtains an instruction to output the notification information from the notification system. The outputter outputs the notification information when the instruction obtainer obtains the instruction.

A notification method according to one aspect of the present disclosure includes obtaining event information about an event that has occurred, from an information source device or an information source service that is a source of information to be notified by a notification device. The notification method includes obtaining a trigger indicating that the notification device has been activated. The notification method includes suspending output of notification information indicating content of the event from the notification device until the trigger is obtained, and causing the notification device to output the notification information when the trigger is obtained.

A program according to one aspect of the present disclosure is a program for causing one or more processors to execute the notification method.

### [Advantageous Effects of Invention]

The notification method and so on according to the present disclosure is advantageous in that a user can easily notice occurrence of an event to be addressed by the user.

### [Brief Description of Drawings]

[FIG. 1]

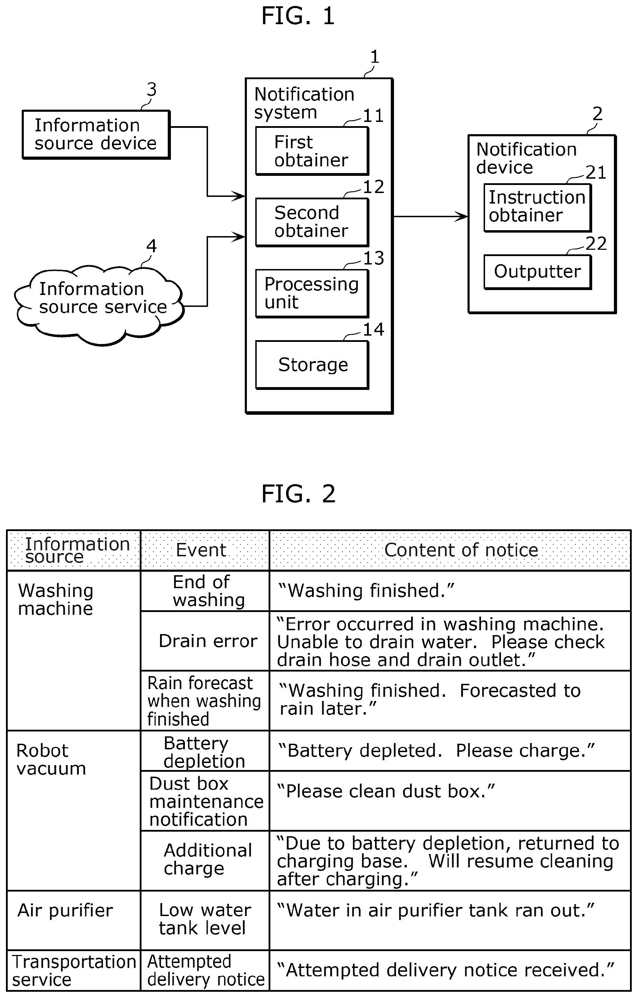

   FIG. 1 is a block diagram illustrating an overall configuration including a notification system according to an embodiment.
[FIG. 2]
   FIG. 2 illustrates notification information to be output by a notification device according to the embodiment.
[FIG. 3]

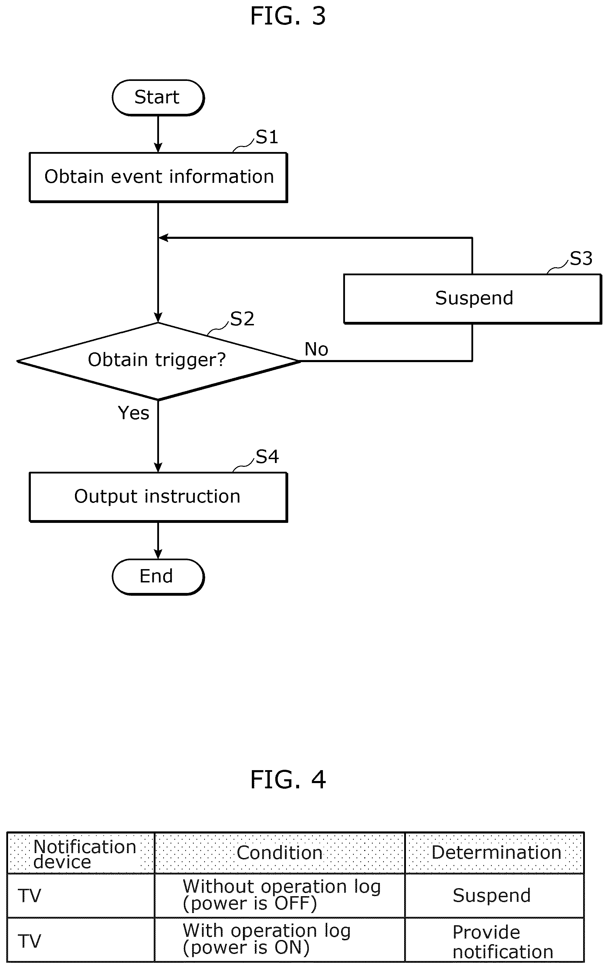

   FIG. 3 is a flowchart illustrating an example of operations of the notification system according to the embodiment.
[FIG. 4]
   FIG. 4 illustrates an example of data to be referred to in a first operation example by the notification system according to the embodiment.
[FIG. 5]

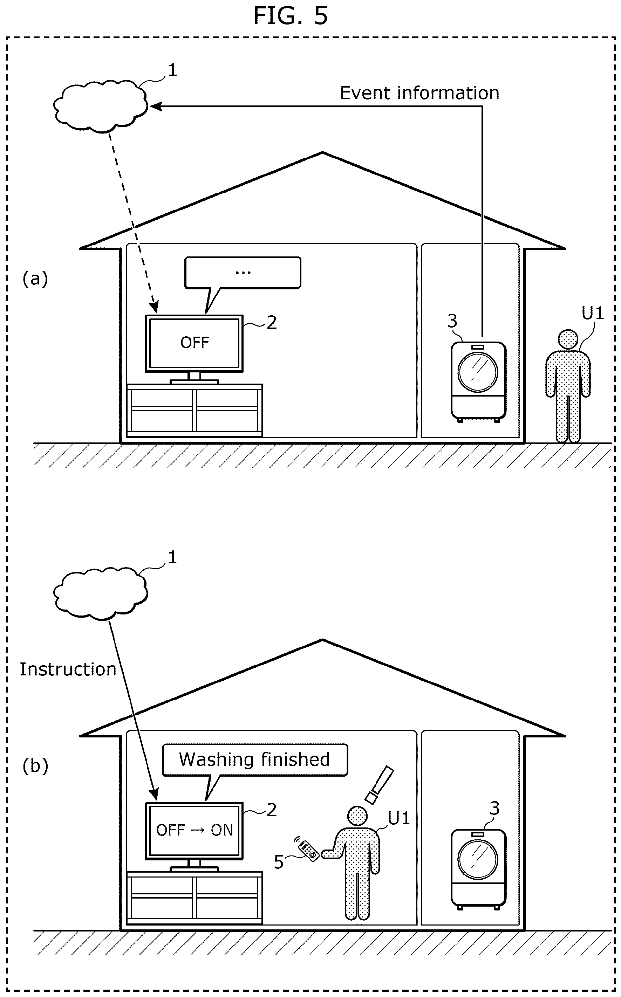

   FIG. 5 illustrates the first operation example of the notification system according to the embodiment.
[FIG. 6]

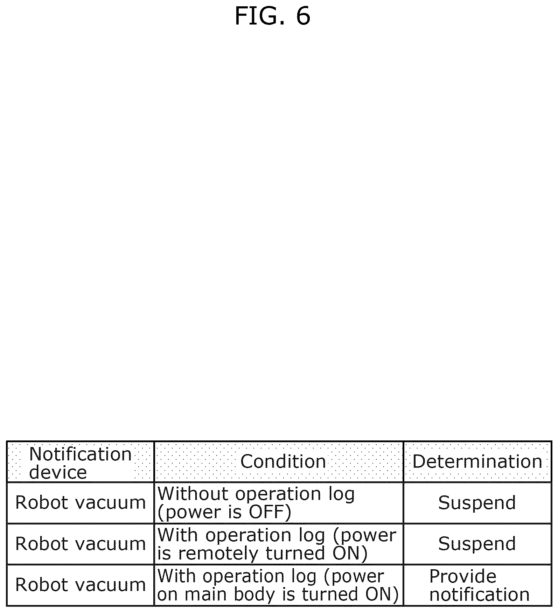

   FIG. 6 illustrates an example of data to be referred to in a second operation example by the notification system according to the embodiment.
[FIG. 7]

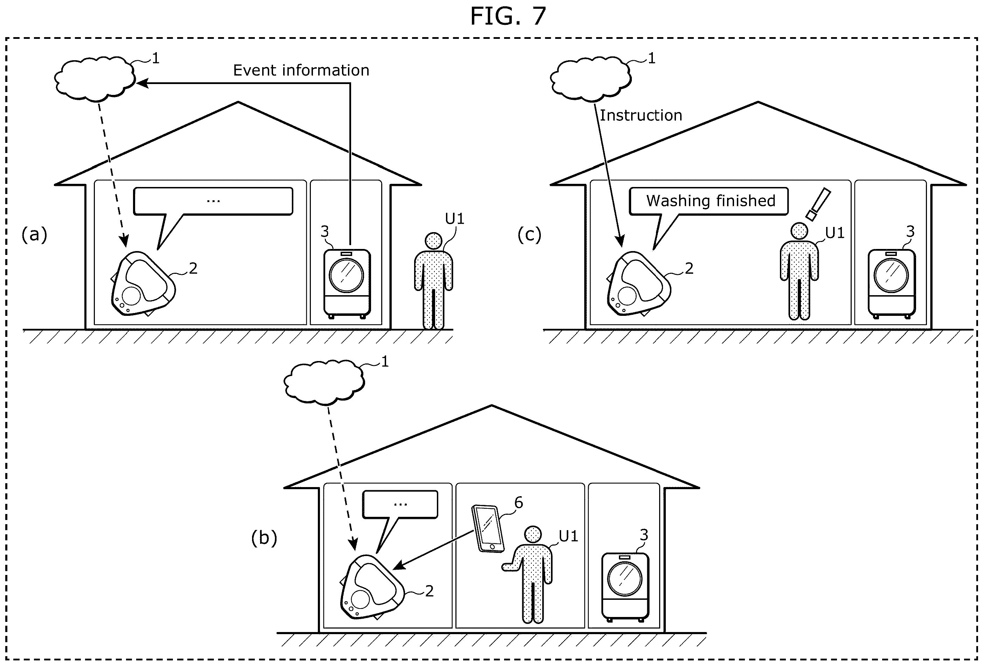

   FIG. 7 illustrates the second operation example of the notification system according to the embodiment.
[FIG. 8]

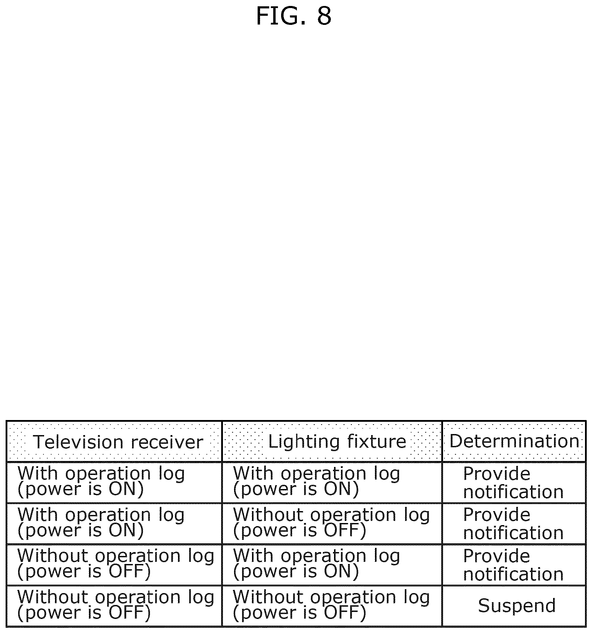

   FIG. 8 illustrates an example of data to be referred to in a third operation example by the notification system according to the embodiment.
[FIG. 9]

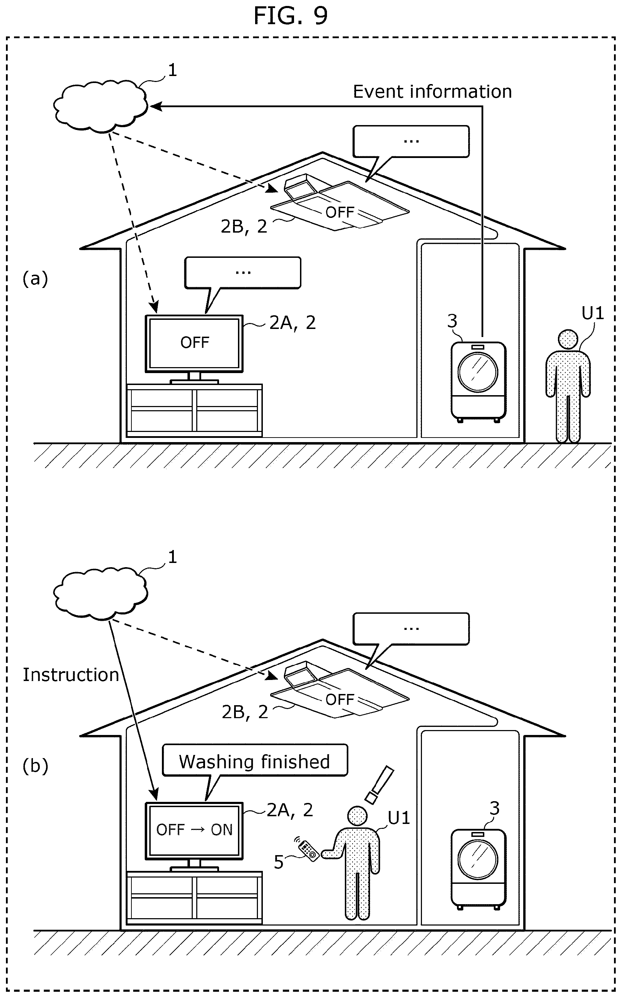

   FIG. 9 illustrates the third operation example of the notification system according to the embodiment.
[FIG. 10]

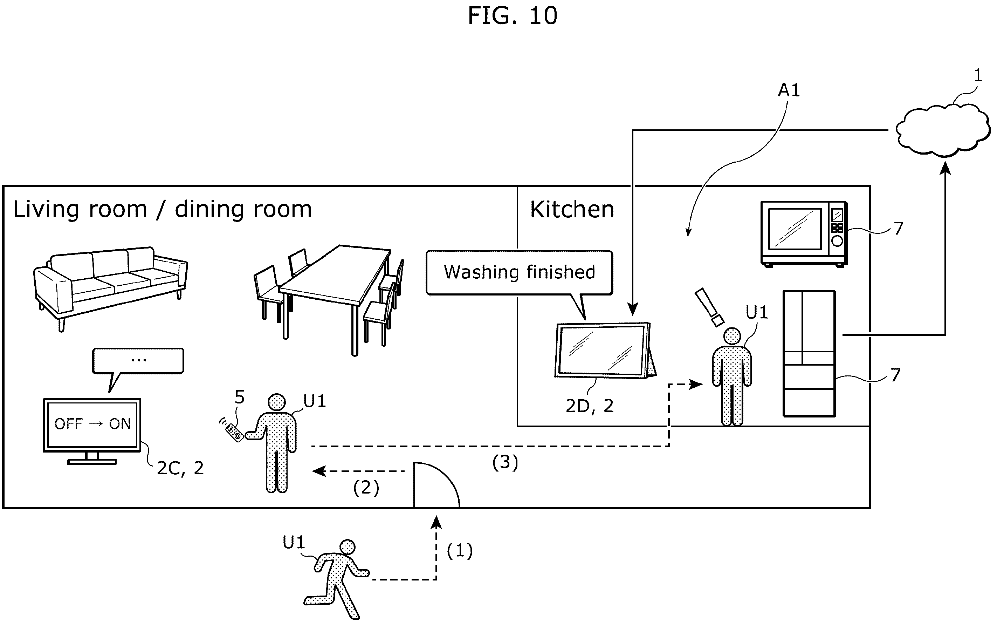

   FIG. 10 illustrates a fourth operation example of the notification system according to the embodiment.

### [Description of Embodiments]

### (Underlying Knowledge Forming Basis of the Present Disclosure)

First, points focused by the inventors will be described below.

Conventionally, as disclosed in PTL 1, there is a technique of providing an instruction of content and timing of speech (notification) to a household appliance (notification device) having a voice input and output function to cause the household appliance to speak. This technique is used to cause a notification device having a voice input and output function to speak about content of an event occurred in a home appliance such as a washing machine to notify a user who is not near the home appliance. Such an event may include, for example, occurrence of a certain error in a home appliance or end of an operation that has been performed by the home appliance.

For example, there may be cases where the user is not near the notification device at a point in time when the notification device notifies the content of an event, because, for example, the user is away from home or at a location different from where the notification device is provided. In such cases, the user will not receive the notification by the notification device, and thus the user may not notice the occurrence of the event to be addressed and may not be able to address the event.

In view of the above, the inventors have created the present disclosure.

Hereinafter, an embodiment will be described with reference to the drawings as necessary. However, description detailed more than necessary may be omitted. For example, detailed description of well-known matters or repeated description of the substantially same structures may be omitted. This is to avoid unnecessary redundancy and make the following description easier for a person skilled in the art to understand.

It should be noted that the inventors have provided the accompanying drawings and following description in order to facilitate sufficient understanding of the present disclosure by those skilled in the art, and thus are not intended to limit the subject matters of the claims.

### [Embodiment]

### [1-1. Overall Configuration]

First, an overall configuration including notification system 1 according to an embodiment will be described with reference to FIG. 1. FIG. 1 is a block diagram illustrating the overall configuration including notification system 1 according to the embodiment. Notification system 1 is a system for outputting notification information indicating content of an event from notification device 2 when notification system 1 obtains event information about the event from information source device 3 or information source service 4.

Notification device 2 is capable of notifying user U1 (for example, see FIG. 5, which will be described later) of content of an event that has occurred in information source device 3 or information source service 4. In the present embodiment, notification by notification device 2 is performed by outputting audio from, for example, a loudspeaker. Note that notification device 2 may provide a notification by displaying, for example, at least one character string or image on a display provided thereto, or by both outputting audio and displaying at least one character string or image.

Notification device 2 is, for example, a device placed in a facility in which user U1 lives, and has a voice input and output function or a displaying function as described above. In the embodiment, notification device 2 is a home appliance. More specifically, notification device 2 may include, for example, a smart loudspeaker, a television receiver, a lighting fixture, a pet camera, a base unit of an intercom, an extension unit of an intercom, an air conditioner, or a robot vacuum. Note that notification device 2 may be a mobile information device possessed by user U1, such as a portable television receiver, a smartphone, a tablet terminal, or a laptop computer.

Notification device 2 includes instruction obtainer 21 and outputter 22. In the embodiment, notification device 2 includes a processor and memory, and executes a computer program stored in the memory by the processor to achieve the configuration included in notification device 2.

Instruction obtainer 21 obtains an instruction to output notification information from notification system 1. In the embodiment, instruction obtainer 21 receives an instruction signal transmitted from notification system 1 via a network such as the Internet (hereinafter, referred to as simply a "network") to obtain an instruction included in the instruction signal.

Outputter 22 outputs notification information when instruction obtainer 21 obtains the instruction. For example, when notification device 2 has a voice output function, outputter 22 downloads an audio message by accessing a uniform resource locator (URL) of a sound source included in the instruction, and reproducing the audio message to output the notification information. Note that outputter 22 may reproduce an audio message included in the instruction. Moreover, when various audio messages are stored in advance in the memory of notification device 2, outputter 22 may read out at least one corresponding audio message from the memory and reproduce the at least one corresponding audio message in accordance with the instruction. Moreover, when notification device 2 has a function of automatically generating speech, outputter 22 may generate and reproduce at least one corresponding audio message in accordance with the instruction.

Moreover, for example, when notification device 2 has a displaying function, outputter 22 may display, for example, at least one character string or image included in the instruction on the display to output notification information. Note that, when various character strings or images are stored in advance in the memory of notification device 2, outputter 22 may read out at least one corresponding character string or image from the memory and display the at least one corresponding character string or image on the display in accordance with the instruction. Moreover, when notification device 2 has a function of automatically generating, for example, character strings or images, outputter 22 may generate at least one corresponding character string or image and display the at least one corresponding character string or image on the display in accordance with the instruction.

Information source device 3 is a source of information to be notified by notification device 2. In the embodiment, information source device 3 is a home appliance. More specifically, information source device 3 is, for example, an air conditioner, a washing machine, a robot vacuum, a refrigerator, a rice cooker, or a microwave. The events that occur in information source device 3 may include, for example, start or end of an operation of information source device 3, occurrence of an error in information source device 3, or maintenance of information source device 3.

Information source service 4 is a service that is a source of information to be notified by notification device 2 and is provided to user U1 from, for example, a server managed by a service provider. Information source service 4 is, for example, transport service or weather forecast service. The events that occurs in information source device 4 may include, for example, start or end of a service provided by information source service 4, or occurrence of an error in information source service 4.

### [1-2. Notification System]

Next, details of notification system 1 will be described. Notification system 1 includes, as illustrated in FIG. 1, first obtainer 11, second obtainer 12, processing unit 13, and storage 14. Note that in the embodiment, notification system 1 includes storage 14, but storage 14 need not be a structural element of notification system 1.

In the embodiment, notification system 1 is implemented by a server. The server includes a processor and memory, and the processor executes a computer program stored in the memory to achieve the configuration included in notification system 1. In the embodiment, memory is storage 14.

Notification system 1 can communicate between notification device 2, information source device 3, and information source service 4 via the network. Note that the example illustrated in FIG. 1 includes one notification device 2, one information source device 3, and one information source service 4, but may include a plurality of notification devices 2, a plurality of information source devices 3, and a plurality of information source services 4.

First obtainer 11 obtains event information about an occurred event from information source device 3 or information source service 4. In the embodiment, first obtainer 11 receives a signal transmitted from information source device 3 or information source service 4 via the network to obtain event information included in the signal. Information source device 3 or information source service 4 transmits the signal to notification system 1 at a point in time when an event has occurred. Therefore, first obtainer 11 obtains event information at a point in time when an event has occurred in information source device 3 or information source service 4. Note that the timing of obtaining event information by first obtainer 11 may be later than the point in time when an event has occurred in information source device 3 or information source service 4.

Second obtainer 12 obtains a trigger indicating that notification device 2 has been activated. In the embodiment, second obtainer 12 receives a signal transmitted from notification device 2 via the network, and obtains a trigger based on information indicating a status of notification device 2 included in the signal. In the embodiment, the information indicating a status of notification device 2 is an operation log of notification device 2.

The trigger may be different depending on the type of notification device 2. For example, when notification device 2 is a television receiver, the trigger is one of (i) switching of the power of the television receiver (notification device 2) from an off-state to an on-state or (ii) returning of the television receiver (notification device 2) from a standby state to the on-state.

Here, the off-state is a state in which power sufficient for operation of notification device 2 is not supplied. Moreover, the on-state is a state in which power sufficient for operation of notification device 2 is supplied and notification device 2 is exhibiting one or more unique functions. Moreover, the standby state is a state in which sufficient power for operation of notification device 2 is supplied, but notification device 2 is not performing the one or more unique functions. User U1 can switch notification device 2 from the off-state to the on-state or from the standby state to the on-state by, for example, directly operating notification device 2 or operating a remote controller that comes with notification device 2.

Moreover, for example, when notification device 2 is a robot vacuum, the trigger is direct operation of notification device 2 by user U1. In this case, second obtainer 12 does not obtain a trigger even when notification device 2 switches to the on-state by, for example, being remotely operated with an information terminal such as a smartphone by user U1. Moreover, in this case, second obtainer 12 does not obtain a trigger even when notification device 2 automatically switches to the on-state according to a previously set schedule. In other words, when notification device 2 is a device that can be remotely operated or perform one or more scheduled operations, second obtainer 12 does not obtain a trigger unless notification device 2 is directly operated.

Processing unit 13 suspends output of notification information indicating content of an event from notification device 2 until a trigger is obtained. When a trigger is obtained, processing unit 13 causes notification device 2 to output notification information. In other words, processing unit 13 does not cause notification device 2 to output notification information until second obtainer 12 obtains a trigger even when first obtainer 11 obtains event information. On the other hand, when second obtainer 12 obtains a trigger, processing unit 13 causes notification device 2 to output notification information about each of one or more items of event information that has not been output at the point in time when the trigger is obtained.

In the embodiment, processing unit 13 causes notification device 2 to output notification information by transmitting an instruction signal to notification device 2 via the network. In the embodiment, processing unit 13 includes a sound source URL in an instruction signal and transmit the instruction signal to notification device 2. The sound source URL is an URL from which an audio message can be downloaded when being accessed. In other words, in the embodiment, the output of instruction to notification device 2 corresponds to transmission of a sound source URL.

More specifically, processing unit 13 causes a speech synthesis system (not illustrated) to generate an audio message and stores the generated audio message and a sound source URL associated with the audio message in a notification database (not illustrated). When the speech synthesis system obtains, from notification system 1, at least one character string indicating the content of notification and at least one parameter for the sound source to be used, the speech synthesis system generates an audio message by synthesizing a speech using the obtained at least one character string and parameter. The notification database is a storage device that stores various audio messages transmitted from notification system 1 via the network and associated with respective sound source URLs. The notification database can be implemented by, for example, semiconductor memory, but may be implemented by using a well-known method of electronic information storage without any limitation.

Processing unit 13 then transmits the sound source URL to notification device 2 via the network to output an instruction to notification device 2 to cause notification device 2 to output the audio message. Moreover, when an existing audio message is present in the notification database, processing unit 13 reads out the sound source URL that corresponds to the existing audio message from the notification database without generating the existing audio message by the speech synthesis system, and transmits the read-out sound source URL to notification device 2.

Note that processing unit 13 may include the audio message in an instruction signal and transmit the instruction signal to notification device 2. Moreover, for example, when various audio messages are stored in advance in the memory of notification device 2 or notification device 2 has a function of automatically generating an audio message, processing unit 13 may include an instruction for specifying an audio message to be generated by notification device 2 in an instruction signal and transmit the instruction signal to notification device 2.

Here, an example of notification information to be output by notification device 2 will be described with reference to FIG. 2. FIG. 2 illustrates notification information to be output by notification device 2 according to the embodiment. In the table illustrated in FIG. 2, "Information source" shows information source device 3 or information source service 4, and "Event" shows an event that occurs in information source device 3 or information source service 4. Moreover, in the table shown in FIG. 2, "Content of notice" shows content of notification to be notified by notification device 2.

For example, when information source device 3 is a washing machine, when an event "End of washing" occurs, notification device 2 outputs an audio message "Washing finished" to provide a notification. For example, when an event "Rain forecast when washing finished" occurs, in other words, when the weather forecast says it is going to rain at a point in time when the washing is finished, notification device 2 outputs an audio message "Washing finished. Forecasted to rain later." to provide a notification.

Moreover, for example, when information source device 3 is a robot vacuum, when an event "Additional charge" occurs, in other words, the robot vacuum starts charging automatically due to battery depletion, notification device 2 outputs an audio message "Due to battery depletion, returned to charging base. Will resume cleaning after charging." to provide a notification. Moreover, for example, when information source service 4 is a transport service and when an event "Attempted delivery notice" occurs, in other words, an event that an attempted delivery notice is put into the mail box because user U1 is not home at the time of delivery of a package, notification device 2 outputs an audio message "Attempted delivery notice received" to provide a notification.

Storage 14 is a storage device that stores information (for example, a computer program) necessary for a processor of notification system 1 to perform various kinds of control. Storage 14 can be implemented by, for example, semiconductor memory, but may be implemented by using a well-known method of electronic information storage without any limitation. Storage 14 stores management data in which the identifier of information source device 3 or information source service 4 and the event information are associated with each other. Moreover, storage 14 stores, for example, instruction data included in the instruction signal to be transmitted to notification device 2.

### [2. Operations]

The following describes operations (i.e., a notification method) of notification system 1 according to the embodiment with reference to FIG. 3. FIG. 3 is a flowchart illustrating an example of operations of notification system 1 according to the embodiment.

When an event occurs in information source device 3 or information source service 4, information source device 3 or information source service 4 transmits a signal including event information to notification system 1 via a network. With this, first obtainer 11 obtains the event information via the network (S1).

After that, processing unit 13 suspends output of notification information from notification device 2 (S3) until second obtainer 12 obtains, via the network, a trigger indicating that notification device 2 has been activated (No in S2). On the other hand, when second obtainer 12 obtains, via the network, a trigger indicating that notification device 2 has been activated (Yes in S2), processing unit 13 transmits an instruction signal including an instruction, i.e., outputs an instruction, to notification device 2 via the network (S4). When receiving the instruction signal, notification device 2 outputs notification information in accordance with the instruction included in the instruction signal.

The following lists examples of operations of notification system 1 according to the embodiment. Note that first to fourth operation examples described below are merely examples of operations of notification system 1, and are not intended to limit the operations of notification system 1 to these operation examples.

### (First Operation Example)

The following describes a first operation example of notification system 1 according to the embodiment with reference to FIG. 4 and FIG. 5. FIG. 4 illustrates an example of data to be referred to in the first operation example by notification system 1 according to the embodiment. FIG. 5 illustrates a first operation example of notification system 1 according to the embodiment. The data illustrated in FIG. 4 shows data to be referred to by notification system 1 when notification device 2 is a television receiver. As illustrated in FIG. 5, in the first operation example, a television receiver, which is notification device 2, is provided in the living room, and a washing machine, which is information source device 3, is provided in the washroom. Moreover, (a) in FIG. 5 illustrates when user U1 is away from home, and (b) in FIG. 5 illustrates when user U1 operates remote controller 5 to turn on the power of the television receiver.

As illustrated (a) in FIG. 5, when the washing machine (information source device 3) finishes operation, the washing machine outputs event information to notification system 1. With this, first obtainer 11 of notification system 1 obtains the event information. The television receiver (notification device 2) is in an off-state at a point in time when first obtainer 11 obtains the event information. Therefore, notification system 1 has not obtained an operation log from the television receiver. In other words, second obtainer 12 of notification system 1 has not obtained a trigger indicating that the television receiver has been activated.

Accordingly, as illustrated in FIG. 4, since an operation log has not been obtained from the television receiver (second obtainer 12 has not obtained a trigger), processing unit 13 of notification system 1 suspends transmission of an instruction signal to the television receiver. Therefore, as illustrated in (a) in FIG. 5, when user U1 is away from home, the television receiver does not output an audio message (notification information).

After that, as illustrated in (b) in FIG. 5, when user U1 performs operation to turn on the power of the television receiver (notification device 2) by using remote controller 5, the television receiver is switched from the off-state to the on-state and the television receiver transmits an operation log indicating that the power is switched to the on-state to notification system 1. With this, second obtainer 12 of notification system 1 obtains a trigger indicating that the television receiver has been activated. This is because user U1 is likely to be around the television receiver in this case.

Accordingly, as illustrated in FIG. 4, processing unit 13 of notification system 1 transmits an instruction signal to the television receiver when the operation log is obtained from the television receiver (second obtainer 12 obtains a trigger). Therefore, as illustrated in (b) in FIG. 5, when user U1 performs operation to turn on the power of the television receiver, the television receiver outputs an audio message (notification information) "Washing finished". With this, user U1 can notice that an event to be addressed by user U1 (end of washing by washing machine) has occurred by hearing the audio message.

### (Second Operation Example)

Next, a second operation example of notification system 1 according to the embodiment will be described with reference to FIG. 6 and FIG. 7. FIG. 6 illustrates an example of data to be referred to in the second operation example by notification system 1 according to the embodiment. FIG. 7 illustrates the second operation example of notification system 1 according to the embodiment. The data illustrated in FIG. 6 shows data to be referred to by notification system 1 when notification device 2 is a robot vacuum. As illustrated in FIG. 7, in the second operation example, a robot vacuum, which is notification device 2, is provided in the living room, and a washing machine, which is information source device 3, is provided in the washroom. Moreover, (a) in FIG. 7 shows a case where user U1 is away from home, and (b) in FIG. 7 shows a case where user U1 in a room different from the living room turns on the power of the robot vacuum by remote operation using information terminal 6 such as a smartphone. Moreover, (c) in FIG. 7 shows a case where user U1 in the living room turns on the power of the robot vacuum by directly operating the robot vacuum.

As illustrated (a) in FIG. 7, when the washing machine (information source device 3) finishes operation, the washing machine outputs event information to notification system 1. With this, first obtainer 11 of notification system 1 obtains the event information. Since the robot vacuum (notification device 2) is in an off-state at a point in time when first obtainer 11 obtains the event information, notification system 1 has not obtained an operation log from the robot vacuum. In other words, second obtainer 12 of notification system 1 has not obtained a trigger indicating that the robot vacuum has been activated.

Accordingly, as illustrated in FIG. 6, since the operation log has not been obtained from the robot vacuum (second obtainer 12 has not obtained a trigger), processing unit 13 of notification system 1 suspends transmission of an instruction signal to the robot vacuum. Therefore, as illustrated in (a) in FIG. 7, when user U1 is away from home, the robot vacuum does not output an audio message (notification information).

After that, as illustrated in (b) in FIG. 7, when user U1 in a room different from the living room turns on the power of the robot vacuum (notification device 2) by using information terminal 6, the robot vacuum is switched from the off-state to the on-state and the robot vacuum transmits an operation log indicating that the power is switched to the on-state by remote operation to notification system 1. In this case, second obtainer 12 of notification system 1 does not obtain a trigger indicating that the robot vacuum has been activated. This is because, since the robot vacuum is remotely operated, user U1 is less likely to be around the robot vacuum.

Accordingly, as illustrated in FIG. 6, although an operation log is obtained from the robot vacuum, this is an operation log of remote operation (second obtainer 12 has not obtained a trigger). Therefore, processing unit 13 of notification system 1 suspends transmission of an instruction signal to the robot vacuum. Therefore, as illustrated in (b) in FIG. 7, when user U1 remotely operates the robot vacuum, the robot vacuum does not output an audio message (notification information).

On the other hand, as illustrated in (c) in FIG. 7, when user U1 in the living room turns on the power of the robot vacuum (notification device 2) by directly operating the robot vacuum, the robot vacuum is switched from the off-state to the on-state and the robot vacuum transmits to notification system 1 an operation log indicating that the power is switched to the on-state by direct operation. With this, second obtainer 12 of notification system 1 obtains a trigger indicating that the robot vacuum has been activated. This is because user U1 is likely to be around the robot vacuum in this case.

Accordingly, as illustrated in FIG. 6, since an operation log is obtained from the robot vacuum and this is an operation log of direct operation (second obtainer 12 obtains a trigger), processing unit 13 of notification system 1 transmits an instruction signal to the robot vacuum. Therefore, as illustrated in (c) in FIG. 7, when user U1 turns on the power of the robot vacuum by direct operation, the robot vacuum outputs an audio message (notification information) "Washing finished". With this, user U1 can notice that an event to be addressed by user U1 (end of washing by washing machine) has occurred by hearing the audio message.

### (Third Operation Example)

Next, a third operation example of notification system 1 according to the embodiment will be described with reference to FIG. 8 and FIG. 9. FIG. 8 illustrates an example of data to be referred to in the third operation example by notification system 1 according to the embodiment. FIG. 9 illustrates the third operation example of notification system 1 according to the embodiment. The data illustrated in FIG. 8 shows data to be referred to by notification system 1 when a television receiver and a lighting fixture present in the same space are notification devices 2.

As illustrated in FIG. 9, in the third operation example, a television receiver and a lighting fixture, which are notification devices 2, are provided in the living room, and a washing machine, which is information source device 3, is provided in the washroom. Hereinafter, the television receiver is also referred to as "notification device 2A", and the lighting fixture is also referred to as "notification device 2B". Moreover, (a) in FIG. 9 illustrates when user U1 is away from home, and (b) in FIG. 9 illustrates when user U1 operates remote controller 5 to turn on the power of the television receiver but the power of the lighting fixture is in an off-state.

As illustrated (a) in FIG. 9, when the washing machine (information source device 3) finishes operation, the washing machine outputs event information to notification system 1. With this, first obtainer 11 of notification system 1 obtains the event information. The television receiver (notification device 2A) and the lighting fixture (notification device 2B) are both in the off-state at a point in time when first obtainer 11 has obtained the event information. Therefore, notification system 1 has not obtained an operation log from either the television receiver or the lighting fixture. In other words, second obtainer 12 of notification system 1 has not obtained a trigger indicating that each of the television receiver and the lighting fixture has been activated.

Accordingly, as illustrated in FIG. 8, since the operation log has not been obtained from either the television receiver or the lighting fixture (second obtainer 12 has not obtained a trigger), processing unit 13 of notification system 1 suspends transmission of an instruction signal to each of the television receiver and the lighting fixture. Therefore, as illustrated in (a) in FIG. 9, when user U1 is away from home, neither the television receiver nor the lighting fixture outputs an audio message (notification information).

After that, as illustrated in (b) in FIG. 9, when user U1 performs operation to turn on the power of the television receiver (notification device 2A) by using remote controller 5, the television receiver is switched from the off-state to the on-state and the television receiver transmits an operation log indicating that the power is switched to the on-state to notification system 1. With this, second obtainer 12 of notification system 1 obtains a trigger indicating that the television receiver has been activated. This is because user U1 is likely to be around the television receiver in this case.

Accordingly, as illustrated in FIG. 8, since an operation log is not obtained from the lighting fixture but an operation log is obtained from the television receiver (second obtainer 12 obtains a trigger), processing unit 13 of notification system 1 transmits an instruction signal to the television receiver. Accordingly, as illustrated in (b) in FIG. 9, when user U1 performs operation to turn on the power of the television receiver, the television receiver outputs an audio message (notification information) "Washing finished". With this, user U1 can notice that an event (end of washing by washing machine) to be addressed by user U1 has occurred by hearing the audio message.

As described above, when a plurality of notification devices 2 are present in the same space, second obtainer 12 of notification system 1 obtains a trigger based on the operation log of each of notification devices 2. In the third operation example, as illustrated in FIG. 8, second obtainer 12 obtains a trigger when an operation log of at least one of the television receiver or the lighting fixture has been obtained.

Note that in the third operation example, second obtainer 12 of notification system 1 may obtain a trigger when operation logs of at least two specific notification devices 2, among the plurality of notification devices 2 present in the same space, are obtained. For example, second obtainer 12 may obtain a trigger when both operation logs are obtained, which are, (i) the operation log indicating that the power of the television receiver (notification device 2A) is switched from the off-state to the on-state and (ii) the operation log indicating that the power of the lighting fixture (notification device 2B) is switched from the off-state to the on-state.

### (Fourth Operation Example)

Next, a fourth operation example of notification system 1 according to the embodiment will be described with reference to FIG. 10. FIG. 10 illustrates the fourth operation example of notification system 1 according to the embodiment. As illustrated in FIG. 10, in the fourth operation example, a stationary television receiver, which is notification device 2, is provided in the living room/dining room, and a portable television receiver, which is notification device 2, is provided in the kitchen. In other words, in the fourth operation example, there are a plurality of notification devices 2. Hereinafter, the stationary television receiver is also referred to as "notification device 2C", and the portable television receiver is also referred to as "notification device 2D". Moreover, as illustrated in FIG. 10, in the fourth operation example, a microwave and a refrigerator which are Internet of Things (IoT) home appliances are provided in the kitchen. Hereinafter, these microwave and refrigerator are also referred to as "external devices 7", which are devices different from notification devices 2. Moreover, although not illustrated, in the fourth operation example, a washing machine, which is information source device 3, is provided in the washroom.

As illustrated in FIG. 10, when coming home (see arrow (1) in the figure), user U1 operates remote controller 5 in the living room/dining room to turn on the power of the stationary television receiver (notification device 2C) (see arrow (2) in the figure). After that, user U1 moves to the kitchen and opens and closes the door of the refrigerator (external device 7) (see arrow (3) in the figure).

Here, when the washing machine (information source device 3) finishes operation, the washing machine outputs event information to notification system 1. With this, first obtainer 11 of notification system 1 obtains the event information. The stationary television receiver (notification device 2C) and the portable television receiver (notification device 2D) are both in the off-state at a point in time when first obtainer 11 has obtained the event information. Therefore, notification system 1 has not obtained an operation log from either the stationary television receiver or the portable television receiver. In other words, second obtainer 12 of notification system 1 has not obtained a trigger indicating that each of the stationary television receiver and the portable television receiver has been activated.

Accordingly, since an operation log has not been obtained from either the stationary television receiver or the portable television receiver (second obtainer 12 has not obtained a trigger), processing unit 13 of notification system 1 suspends transmission of an instruction signal to each of the stationary television receiver and the portable television receiver. Therefore, when user U1 is away from home, neither the stationary television receiver nor the portable television receiver outputs an audio message (notification information).

After that, when user U1 performs operation to turn on the power of the stationary television receiver (notification device 2C) by using remote controller 5, the stationary television receiver is switched from the off-state to the on-state and the stationary television receiver transmits an operation log indicating that the power is switched to the on-state to notification system 1. With this, second obtainer 12 of notification system 1 obtains a trigger indicating that the television receiver has been activated. However, the fourth operation example is different from the third operation example in that processing unit 13 of notification system 1 does not transmit an instruction signal to the stationary television receiver at this point.

After that, when user U1 moves to the kitchen and opens and closes a door of the refrigerator (external device 7), the refrigerator outputs an action log indicating that the door has been opened and closed to notification system 1. With this, first obtainer 11 (or second obtainer 12) of notification system 1 obtains the action log of the refrigerator. Processing unit 13 of notification system 1 then estimates that user U1 is in the kitchen based on the obtained action log. This is because, since a door of the refrigerator is opened or closed, user U1 is likely to be in the kitchen.

Note that the refrigerator may output to notification system 1 an action log indicating that the amount of food, etc. contained in the refrigerator has been changed. In this case, processing unit 13 of notification system 1 can also estimate that user U1 is in the kitchen based on the obtained action log. This is because, since the amount contained in the refrigerator has been changed, user U1 has used the refrigerator and is likely to be in the kitchen.

Since processing unit 13 of notification system 1 has estimated area A1 (here, kitchen) in which user U1 is present with the trigger obtained, processing unit 13 transmits the instruction signal to the portable television receiver in the kitchen, not to the stationary television receiver. Accordingly, as illustrated in FIG. 10, the portable television receiver outputs an audio message (notification information) "Washing finished". With this, user U1 in the kitchen can notice that an event to be addressed by user U1 (end of washing by washing machine) has occurred by hearing the audio message.

As described above, in the fourth operation example, when processing unit 13 of notification system 1 estimates that user U1 is in area A1 (here, kitchen) based on the operation of external device 7 (here, refrigerator) different from notification devices 2, processing unit 13 causes notification device 2 (here, portable television receiver) in area A1 among notification devices 2 to output the notification information.

Note that, in the fourth operation example, external device 7 is a refrigerator, but the present disclosure is not limited to this example. For example, when external device 7 is an air conditioner in the bedroom, processing unit 13 of notification system 1 can estimate area A1 in which user U1 is present based on the action log of the air conditioner. More specifically, when the air conditioner is activated, processing unit 13 can estimate that user U1 is in the bedroom. In this case, processing unit 13 causes notification device 2 in the bedroom to output the notification information.

Moreover, in the fourth operation example, external devices 7 are IoT home appliances such as a microwave and a refrigerator, but the present disclosure is not limited to this example. External device 7 may be a device that outputs necessary information to estimate area A1 in which user U1 is present, and may be a sensor provided to home appliances (for example, a human sensor or an illuminance sensor), or a smart meter for use in home energy management system (HEMS).

For example, when external device 7 is a sensor, processing unit 13 of notification system 1 can estimate that user U1 is in area A1 based on a result detected by the sensor. More specifically, in cases where the sensor is a human sensor, when the human sensor reacts, processing unit 13 can estimate that user U1 is in area A1 in which the human sensor is provided. Moreover, in cases where the sensor is an illuminance sensor, when the illuminance sensor detects an illuminance greater than or equal to a threshold, processing unit 13 can estimate that user U1 is in area A1 in which the illuminance sensor is provided.

Moreover, for example, when external device 7 is a smart meter, processing unit 13 of notification system 1 can estimate that user U1 is in area A1 based on a result measured by the smart meter. More specifically, when the consumption of running water measured by the smart meter has changed abruptly, processing unit 13 can estimate that user U1 is in area A1 in which running water is available, such as the kitchen.

### [3. Advantages, etc.]

The following describes advantages of notification system 1 (notification method) according to the embodiment.

As described above, there may be cases where user U1 is not near the notification device at a point in time when notification device 2 notifies content of an event, because, for example, user U1 is away from home or at a location different from where notification device 2 is provided. In such cases, even when notification device 2 provides a notification, user U1 cannot notice the occurrence of the event to be addressed and may not be able to address the event.

In view of the above problem, when notification system 1 (notification method) according to the embodiment obtains a trigger indicating that notification device 2 has been activated, that is, when user U1 is likely to be around notification device 2, notification system 1 (notification method) causes notification device 2 to provide a notification. Therefore, notification system 1 (notification method) according to the embodiment is advantageous in that user U1 can easily notice the notification from notification device 2, and user U1 can easily notice occurrence of an event to be addressed by user U1.

### [Variations]

As described above, the embodiment has been given as an example of the technique disclosed in the present application. However, the technique in the present disclosure is not limited to this example, and is also applicable to embodiments as a result of appropriate modification, replacement, addition, and omission, for instance. Moreover, the structural elements described in the embodiment may be combined as a new embodiment.

Therefore, the following are examples of variations of the embodiment.

In the embodiment, when a plurality of items of event information each corresponding to one of a plurality of events and a trigger is obtained, processing unit 13 may cause notification device 2 to output, as notification information, summary information indicating a summary of content of the plurality of events. For example, it is assumed that first obtainer 11 has obtained the plurality of items of event information at a point in time when second obtainer 12 obtains the trigger. In this case, processing unit 13 causes notification device 2 to output the summary information by transmitting to notification device 2 an instruction signal including a sound source URL from which an audio message (summary information) of the summary of content of the plurality of events can be downloaded.

For example, it is assumed that, when second obtainer 12 obtains a trigger, the following three evens have occurred in total: (i) an event in which the washing machine has finished operation, (ii) an event in which cleaning by the robot vacuum has finished, and (iii) an event in which the remaining water level of the water tank of an air purifier has been lowered. In this case, processing unit 13 causes notification device 2 to output an audio message (summary information) such as "Three notifications arrived when turned off. Please check the audio message history".

Note that, processing unit 13 may determine whether to cause notification device 2 to output the summary information according to a total number of events occurring at a point in time when second obtainer 12 obtains the trigger. For example, when the total number of events occurring at the point in time is less than a threshold, processing unit 13 may cause notification device 2 to output notification information for each event. When the total number of events occurring at the point in time is greater than or equal to the threshold, processing unit 13 may cause notification device 2 to output summary information. The threshold may be appropriately set by user U1.

In the embodiment, notification device 2 and information source device 3 are different devices, but the present disclosure is not limited to this example. For example, information source device 3 may also serve as notification device 2. As an example, when a plurality of information source devices 3 are present and an event has occurred in any one of information source devices 3, another information source device 3 different from information source device 3 in which the event has occurred may function as notification device 2.

Moreover, for example, in the above-described embodiment, notification system 1 is implemented as a single device, but may be implemented as a plurality of devices. When notification system 1 is implemented as a plurality of devices, the structural elements included in notification system 1 may be allocated to the plurality of devices in any manner. For example, one or more structural elements included in notification system 1 in the foregoing embodiment may be provided to a facility in which user U1 lives. In other words, the present disclosure may be implemented by cloud computing or edge computing.

Moreover, for example, in the foregoing embodiment, all or at least one of the structural elements of notification system 1 in the present disclosure may include dedicated hardware, or achieved by executing an appropriate software program for each of the structural elements. Each structural element may be achieved by a program executor, such as a central processing unit (CPU) or a processor, reading and executing a software program recorded on a recording medium such as a hard disk drive (HDD) or semiconductor memory.

Moreover, the structural elements of notification system 1 in the present disclosure may include one or more electronic circuits. Each of the one or more electronic circuits may be a general-purpose circuit or a dedicated circuit.

The one or more electronic circuits may include, for example, a semiconductor device, an integrated circuit (IC), or a large-scale integrated (LSI) circuit. The IC or LSI circuit may be integrated into a single chip or multiple chips. Due to a difference in the degree of integration, the electronic circuit referred here to as an IC or LSI may be referred to as a system LSI, very large scale integration (VLSI), or ultra large scale integration (ULSI). Furthermore, a field programmable gate array (FPGA) which is programmable after manufacturing of the LSI can be used for the same purposes.

Moreover, the general or specific aspects of the present disclosure may be achieved by a system, a device, a method, an integrated circuit, or a computer program. Alternatively, the present disclosure may be achieved as a non-transitory computer-readable recording medium, such as an optical disk, an HDD, or semiconductor memory, having the computer program recorded thereon. For example, the present disclosure may be implemented as a program that allows a computer to execute an air conditioning method according to the foregoing embodiment. Moreover, the program may be recorded on a non-transitory computer-readable recording medium such as a CD-ROM, or distributed via a communication channel such as the Internet.

The foregoing embodiment has been described to illustrate the technique in the present disclosure. To this end, the detailed description and the accompanying drawings have been provided.

Therefore, the structural elements described in the accompanying drawings and the detailed descriptions may therefore include not only structural elements essential for the solution of the problem, but also structural elements that are not essential for the solution of the problem are provided to illustrate the technique. The inclusion of such optional structural elements in the detailed description and the accompanying drawings therefore should not instantly lead to conclusion that these optional structural elements are essential structural elements.

Moreover, the foregoing embodiment is intended to be illustrative of the disclosed technique, and therefore various changes, replacements, additions, omissions, etc. can be made within the scope of the appended claims and their equivalents.

### (Conclusion)

As described above, notification system 1 according to a first aspect includes first obtainer 11, second obtainer 12, and processing unit 13. First obtainer 11 obtains event information about an event that has occurred, from information source device 3 or information source service 4 that is a source of information to be notified by notification device 2. Second obtainer 12 obtains a trigger indicating that notification device 2 has been activated. Processing unit 13 suspends output of notification information indicating content of the event from notification device 2 until the trigger is obtained, and causes notification device 2 to output notification information when the trigger is obtained.

This is advantageous in that user U1 can easily notice the notification from notification device 2, and user U1 can easily notice occurrence of an event to be addressed by user U1.

Moreover, in notification system 1 according to a second aspect, the trigger in the first aspect is one of (i) switching of a power of notification device 2 from an off-state to an on-state or (ii) returning of notification device 2 from a standby state to the on-state.

With this, operation of notification device 2 by user U1 around notification device 2 can be regarded as a trigger, and therefore user U1 can more easily notice the notification from notification device 2.

Moreover, in notification system 1 according to a third aspect, the trigger in the first aspect is direct operation of notification device 2 by a user.

With this, operation of notification device 2 by user U1 around notification device 2 can be regarded as a trigger, and therefore user U1 can more easily notice the notification from notification device 2.

Moreover, in notification system 1 according to a fourth aspect, when a plurality of notification devices 2 each being the notification device are present in a same space in any one of the first to third aspects, second obtainer 12 obtains the trigger based on an operation log of each of the plurality of notification devices 2.

With this, by referring to operation log of each of the plurality of notification devices 2 present in the same space, the presence or absence of user U1 around notification devices 2 can be estimated easily.

Moreover, notification system 1 according to a fifth aspect includes a plurality of notification devices 2 each being notification device 2 in any one of the first to fourth aspects. When processing unit 13 estimates area A1 in which user U1 is present based on an operation of external device 7 different from the plurality of notification devices 2, processing unit 13 causes notification device 2 in area A1 among the plurality of notification devices 2 to output the notification information.

With this, when a plurality of notification devices 2 are present, the notification information is output from notification device 2 in area A1 in which user U1 is estimated to be present. Therefore, user U1 can more easily notice the notification from notification device 2.

Moreover, notification system 1 according to a sixth aspect, when a plurality of items of event information each corresponding to one of a plurality of events and the trigger are obtained in any one of the first to fifth aspects, processing unit 13 causes notification device 2 to output summary information indicating a summary of content of the plurality of events, the plurality of items of event information each being the event information, the plurality of events each being the event.

With this, user U1 is less likely to feel discomfort than when notification device 2 provides a notification for each event.

Moreover, notification device 2 according to a seventh aspect includes instruction obtainer 21 and outputter 22. Instruction obtainer 21 obtains an instruction to output the notification information from notification system 1 according to any one of the first to sixth aspects. Outputter 22 outputs the notification information when instruction obtainer 21 obtains the instruction.

This is advantageous in that user U1 can easily notice the notification from notification device 2, and user U1 can easily notice occurrence of an event to be addressed by user U1.

Moreover, a notification method according to an eight aspect includes: obtaining event information about an event that has occurred, from information source device 3 or information source service 4 that is a source of information to be notified by notification device 2 (S1). In this notification method, obtaining a trigger indicating that notification device 2 has been activated (S2). In this notification method, suspending output of notification information indicating content of the event from notification device 2 until the trigger is obtained (S3), and causing notification device 2 to output the notification information when the trigger is obtained (S4).

This is advantageous in that user U1 can easily notice the notification from notification device 2, and user U1 can easily notice occurrence of an event to be addressed by user U1.

Moreover, a program according to a ninth aspect causes one or more processors to execute the notification method according to the eighth aspect.

This is advantageous in that user U1 can easily notice the notification from notification device 2, and user U1 can easily notice occurrence of an event to be addressed by user U1.

### [Industrial Applicability]

The present disclosure is applicable to systems notifying a user of information about events that have occurred in devices or services.

### [Reference Signs List]

- 1: notification system
- 11: first obtainer
- 12: second obtainer
- 13: processing unit
- 14: storage
- 2, 2A, 2B, 2C, 2D: notification device
- 21: instruction obtainer
- 22: outputter
- 3: information source device
- 4: information source service
- 5: remote controller
- 6: information terminal
- 7: external device
- A1: area
- U1: user

## Claims

1. A notification system comprising:
a first obtainer that obtains event information about an event that has occurred, from an information source device or an information source service that is a source of information to be notified by a notification device;
a second obtainer that obtains a trigger indicating that the notification device has been activated; and
a processing unit that suspends output of notification information indicating content of the event from the notification device until the trigger is obtained, and causes the notification device to output the notification information when the trigger is obtained.

2. The notification system according to claim 1, wherein
the trigger is one of (i) switching of a power of the notification device from an off-state to an on-state or (ii) returning of the notification device from a standby state to the on-state.

3. The notification system according to claim 1, wherein
the trigger is direct operation of the notification device by a user.

4. The notification system according to any one of claims 1 to 3, wherein
when a plurality of notification devices each being the notification device are present in a same space, the second obtainer obtains the trigger based on an operation log of each of the plurality of notification devices.

5. The notification system according to any one of claims 1 to 3, comprising:
a plurality of notification devices each being the notification device, wherein
when the processing unit estimates an area in which a user is present based on an operation of an external device different from the plurality of notification devices, the processing unit causes a notification device in the area among the plurality of notification devices to output the notification information.

6. The notification system according to any one of claims 1 to 3, wherein
when a plurality of items of event information each corresponding to one of a plurality of events and the trigger are obtained, the processing unit causes the notification device to output summary information indicating a summary of content of the plurality of events, the plurality of items of event information each being the event information, the plurality of events each being the event.

7. A notification device comprising:
an instruction obtainer that obtains an instruction to output the notification information from the notification system according to any one of claims 1 to 3; and
an outputter that outputs the notification information when the instruction obtainer obtains the instruction.

8. A notification method comprising:
obtaining event information about an event that has occurred, from an information source device or an information source service that is a source of information to be notified by a notification device;
obtaining a trigger indicating that the notification device has been activated; and
suspending output of notification information indicating content of the event from the notification device until the trigger is obtained, and causing the notification device to output the notification information when the trigger is obtained.

9. A program for causing one or more processors to execute the notification method according to claim 8.
